# EUROPEAN PATENT APPLICATION

(11) **EP 4 726 103 A1**
(43) Date of publication of application: **15.04.2026**
(21) Application number: 24206604.1
(22) Date of filing: 15.10.2024
(51) Int. Cl.: D06N 3/18, D06N 3/00, D06N 3/06, D06N 3/14, D06N 3/10

(54) **FLEXIBLE ARTIFICIAL LEATHER WITH CARBON STORAGE ALGAE FILLERS, METHODS AND USES THEREOF**

(30) Priority: 09.10.2024 PT 2024119766
(71) Applicant: TMG Tecidos Plastificados e Outros Revestimentos Para A Industria Automovel SA, 4770-590 Vila Nova de Famalicão - São Cosme Vale (PT)
(72) Inventor: PORTELA DE LEMOS, Ana Francisca, 4770-590 VILA NOVA DE FAMALICÃO (PT); SILVA MAIA, Tiago Filipe, 4770-590 VILA NOVA DE FAMALICÃO (PT); RIBEIRO CERQUEIRA, Nelson António, 4770-590 VILA NOVA DE FAMALICÃO (PT)
(74) Representative: Patentree

(57) **Abstract**

The present disclosure relates to polymeric materials for use in the automotive industry, specifically to a polymeric flexible multi-layered material with at least one polymeric layer comprising algae for application as artificial leather.

## Description

### TECHNICAL FIELD

The present disclosure relates to polymeric materials for use in the automotive industry, specifically to a polymeric flexible multi-layered material with at least one polymeric layer comprising algae for application as artificial leather.

### BACKGROUND

Artificial leather are usually multi-layer flexible materials which includes a polymer in the surface layer, which protects against abrasion and impact and determines the visual appearance of the artificial leather, and a support material, typically a textile. This type of material has a relevant role in several industries, in particular automotive industry due to its durability, cost-effectiveness, and versatility. It offers an alternative to genuine leather, providing similar aesthetics and comfort while being more resistant to wear, stains, and environmental factors. Its use also aligns with growing consumer and industry demand for sustainable and animal-free materials.

In the automotive industry, carbon emissions are also one of the most pressing problems. As suppliers try to achieve a more ecologic final product to answer the demand, reducing, capturing and storing carbon is one of the alternatives. Algae are known to be capable of photosynthesis which means they are capable of capturing and storing carbon.

Document DE102021205222 discloses a process for the production of an aggregate for a plastic part based on a plastic raw material, the aggregate being intended to be mixed with the plastic raw material and then formed into the plastic part, characterized in that a plant-based waste material is dried and mechanically crushed and placed in a liquid or paste medium, dispersed in the absence of air, the liquid or pasty medium being formed on the basis of a polymer matrix that is compatible with the plastic raw material and/or a plasticizer that is compatible with the plastic raw material. However, this document does not disclose the use of algae particles in a concentration and a particle size as disclosed in the present disclosure.

The document US2020283600 describes an algae-based thermoplastic composition comprising: (a) a protein-rich algae biomass selected from either microalgae, macroalgae or combinations thereof, wherein the protein content is greater than or equal to 15% by weight of the algae biomass and the algae biomass is dried to a moisture content of less than or equal to 15% by weight and having a particle d99 of up to 200 microns, wherein the dried algae biomass is at least 5% by weight of the thermoplastic composition; and (b) a resin selected from the group consisting of: biodegradable polymers, polyesters, polyolefins, thermoplastic elastomers, styrenics, polyamides, polyethers, polyvinyl chlorides (PVC), thermoplastic polyurethanes (TPU), polybutylene adipate-co-terephthalate (PBAT), polyethylene (PE), ethylene-vinyl acetate (EVA), and combinations thereof.

Document US11596923 also describes an algae-based thermoplastic composition comprising: (a) a protein-rich algae biomass selected from either microalgae, macroalgae or combinations thereof, wherein the protein content is greater than or equal to 15% by weight of the algae biomass and the algae biomass is dried to a moisture content of less than or equal to 15% by weight and having a particle d99 of up to 200 microns, wherein the dried algae biomass is at least 5% by weight of the thermoplastic composition; (b) a resin configured to exhibit rheological properties suitable for blending with algae including a melting temperature less than 250° C. and a melt flow rate in excess of 0.01 g/10 min.

These facts are disclosed in order to illustrate the technical problem addressed by the present disclosure.

### GENERAL DESCRIPTION

The present disclosure relates to a flexible synthetic leather, multi-layered material which contains at least one lacquer that acts as a surface coating, at least one layer of polymer, preferably PVC, with algae fillers and expanding microspheres and a textile carrier. By applying algae particles as fillers in the heaviest polymeric layers, compact and foam, not only the quantity of chemical components typically used as fillers reduces, but also allows the carbon to be trapped in the particle itself as it naturally happens with algae. Moreover, since the algae particles are incorporated between the layers of the multi-layered material, carbon is trapped within said structure until the material's end of life.

By incorporating algae as bio fillers to reduce chemical components in material, carbon is also implicitly incorporated in the material, and stored until the material's end of life.

Surprisingly, the addition of algae as fillers allowed a reduction on the amount of harmful chemical components present in the multi-layered material, as they were successfully substituted by the algae without compromising the final performance of the multi-layered material. Also, the addition of algae as fillers allowed the storage of carbon by the fillers, which reduces the carbon footprint of the material. In addition, when a high percentage of algae is used (15 to 20% (w/w)), the material has the potential to become lighter since the algae particles are in the form of thin leaves. This allows to add high quantities of algae as fillers, without compromising the final weight of the product. The disclosed flexible multi-layered material exhibits characteristics similar to natural leather, including softness, flexibility, and durability. It possesses excellent tensile strength, tear resistance, and abrasion resistance, making it suitable for use in high-wear areas of vehicle interiors. For algae concentrations higher than 20% (w/w), the viscosity and consistency of the paste hinders its application. The material becomes a thick paste, making it difficult to apply. Above this concentration of 20% (w/w) of algae biomass, the mechanical performance of the final material is also hindered as the polymer bonds are reduced and the layers become more fragile.

Therefore, the disclosed flexible multi-layered material comprising algae as fillers is a more ecological and competitive material for the interiors of automotive industry and market for usage in upholstery, where flexible materials are needed.

The present realizations are useful for the automotive industry, since one of the trends are lightweight materials to consequently make cars lighter in weight. And as another trend is to make cars more environmentally sustainable as possible, by adding algae as fillers, not only is possible to lock carbon inside the material until its end of life but also to reduce the polymers components since algae fills the place of those components.

The solution presented in the present description is based in particular on the fact that algae particles are in the form of thin leaves which makes them very light. And as such it is possible to add a high percentage in weight on the material and by doing so, reducing the polymer components and reducing the weight of the final product.

An aspect of the present disclosure further relates to a flexible multi-layered material comprising: a plurality of polymeric layers, wherein at least one of the plurality of polymeric layers comprises algae particles as a filler, and wherein the concentration of algae particles in the at least one of the plurality of polymeric layer ranges from 0.1% to 20% (w/w). Unexpectedly, the addition of algae as fillers allowed for a reduction in the amount of harmful chemical components present in the multi-layered material, as they were successfully substituted by the algae without compromising the final performance of the material. The algae particles act as natural fillers, contributing to the environmental sustainability of the product. Additionally, the algae particles enable carbon storage within the material, effectively reducing its carbon footprint. Surprisingly, the resulting material maintains essential characteristics, such as softness, flexibility, and durability, similar to those of natural leather. It exhibits excellent tensile strength, tear resistance, and abrasion resistance, making it suitable for use in high-wear applications, such as vehicle interiors or durable consumer products.

Surprisingly, the incorporation of algae into the PVC layers does not compromise the evaluated mechanical properties and, in fact, decrease the weight/density. Remarkably, the reduction in sample weight resulting from the partial replacement of the polymeric matrix with algae did not adversely affect the final properties of the material. The results confirming the suitability of the materials of the present disclosure for use in the automotive industry, specifically in car interior trims and upholstery.

The solution of the present disclosure offers significant advantages, including reduced weight through the partial replacement of the polymeric matrix with algae without compromising mechanical properties, improved density beneficial for automotive applications, enhanced sustainability by reducing reliance on synthetic polymers, and versatility for various uses, particularly in automotive interior trims and upholstery.

In an embodiment for better results, the concentration of algae particles in the at least one of the plurality of polymeric layers ranges from 0.15% - 10% (w/w); more preferably 0.2 - 5% (w/w); even more preferably 0.5-2% (w/w).

In an embodiment for better results, the particle size of the algae particles ranges from 50 to 500 µm, measured by sieving; preferably 100 to 400 µm; more preferably 200 to 300 µm.

In an embodiment for better results, the algae are a macroalgae, a microalgae, or mixtures thereof.

In an embodiment for better results, the macroalgae are selected from a list comprising Ulva rigida, Chaetomorpha linum, and Palmaria palmata.

In an embodiment for better results, the microalgae are selected from a list comprising Chlorella vulgaris, and Arthrospira platensis.

In an embodiment for better results, the plurality of polymeric layers comprises polyvinyl chloride, a polyurethane, a thermoplastic elastomer, or combinations thereof.

In an embodiment for better results, at least one of the plurality of polymeric layers is a polymeric compact layer or a foam polymeric layer.

In an embodiment for better results, the grammage of the polymeric compact layer ranges from 200 to 400 g/m2, preferably 250 to 350 g/m2 and/or the density of the polymeric compact layer ranges from 1100 to 1300 kg/m3; and/or wherein the grammage of the polymeric foam layer ranges from 120 to 350 g/m2, preferably 140 to 185 g/m2 and/or the the density of the polymeric foam layer ranges from 500 to 1050 kg/m3, preferably from 600 to 1000 kg/m3.

In an embodiment for better results, the flexible multi-layered material further comprises an adhesive layer, a support layer, a lacquer layer, a pre-skin layer or combinations thereof.

In an embodiment for better results, the lacquer layer is an external layer over the plurality of polymeric layers.

In an embodiment for better results, the support layer comprises textile, knitted fabric, spacer fabric, woven, natural fibers, or a combination of thereof.

In an embodiment for better results, the adhesive layer is a polymeric adhesive foam layer.

An article comprising a flexible multi-layered material described in the present disclosure. Preferably, wherein said article is an upholstery article, or a seat, or door panel, or automotive interior trim.

### BRIEF DESCRIPTION OF THE DRAWINGS

The following figures provide preferred embodiments for illustrating the disclosure and should not be seen as limiting the scope of invention.
**Figure 1****:** Schematic representation of an embodiment of a flexible multi-layered material as disclosed in the present disclosure, with an algae filler in the polymeric pre-skin layer.
**Figure 2****:** Schematic representation of an embodiment of a flexible multi-layered material as disclosed in the present disclosure, with an algae filler in the polymeric compact layer.

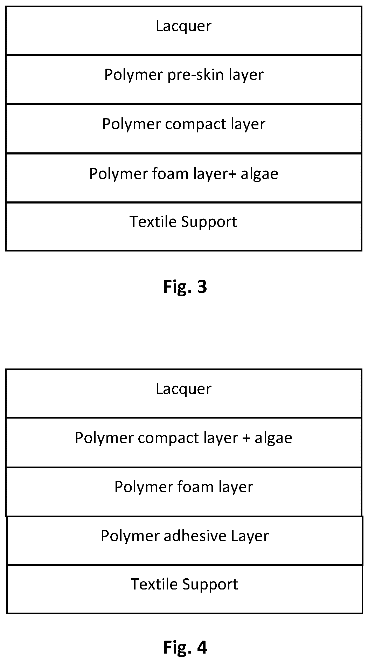

**Figure 3****:** Schematic representation of an embodiment of a flexible multi-layered material as disclosed in the present disclosure, with an algae filler in the polymeric foam layer.
**Figure 4****:** Schematic representation of an embodiment of a flexible multi-layered material as disclosed in the present disclosure, with an algae filler in the polymeric compact layer.
**Figure 5****:** Schematic representation of an embodiment of a flexible multi-layered material as disclosed in the present disclosure, with an algae filler in the polymeric compact layer and in the polymeric foam layer.
**Figure 6****:** Photographic representation of a flexible multi-layered material according to the present disclosure.

### DETAILED DESCRIPTION

The present disclosure relates to a flexible multi-layered material, specifically incorporating algae particles into polymeric layers, particularly for use in the automotive industry.

An aspect of the present disclosure relates to sustainable polymer-based materials for interior trims, preferably car interior trims, using algae particles as filers. Surprisingly, the incorporation of the algae filers substantially favours the weight (making the product lighter) and carbon content of the flexible multi-layered material, since the algae particles are in the form of thin leaves which by themselves already are considered extremely light in weight. This facilitates the addition of high weight percentages of algae in the polymeric composition, up to 20% (w/w), which reduces the polymer quantity in the final material, making it lighter. Also, since algae are organisms capable of photosynthesis, the particles absorb carbon. When adding the algae, the carbon in the particles is trapped in the multilayer material.

For the scope and interpretation of the present disclosure, a "pre-skin" refers to a preliminary layer or coating applied to the base material to provide a uniform base for subsequent layers, ensuring better adhesion and an even final texture. This layer enhances the overall durability and resistance of the synthetic leather.

For the scope an interpretation of the present disclosure, a "polymeric foam layer" refers to a porous polymeric layer comprising a foaming agent, such as chemical and/or physical blowing agent, or microspheres; and a "compact polymeric layer" refers to a polymeric layer prepared without foaming agents.

In an embodiment, the grammage of the polymeric compact layer ranges from 200 to 400 g/m², preferably 250 to 350 g/m².

In an embodiment, the grammage of the polymeric foam layer ranges from 120 to 350 g/m², preferably 140 to 185 g/m².

In an embodiment, the grammage of the polymeric adhesive layer ranges from 100g/m² to 200g/m², preferably 120g/m².

In an embodiment, the density of the polymeric compact layer ranges from 1100 to 1300 kg/m³.

In an embodiment, the density of the polymeric foam layer ranges from 500 to 1050 kg/m³, preferably from 600 to 1000 kg/m³.

In an embodiment, the flexible multi-layered material further comprises an adhesive layer, a support layer, a lacquer layer, or combinations thereof.

In an embodiment, the lacquer layer is an external layer over the plurality of polymeric layers.

In an embodiment, the support layer comprises textile, knitted fabric, spacer fabric, woven, natural fibers, or a combination thereof. In a preferred embodiment, the support layer is a textile layer.

In an embodiment, the adhesive layer is a polymeric adhesive foam layer.

In an embodiment, the flexible multi-layered material comprises: a lacquer layer; a plurality of polymeric layers consisting of a polymeric compact layer, a polymeric foam layer, and a polymeric adhesive foam layer; and a support layer selected from the following list: fabric, knitted fabric, nonwoven, foam, or mixtures thereof; wherein at least one of the layers of the plurality of polymeric layers comprises algae particles as filers.

In an embodiment, the algae filler can be incorporated in any of the polymeric layers of the flexible multi-layered material, i.e., polymeric compact layer, polymeric pre-skin layer, or polymeric foam layer.

In an embodiment for better results, the concentration of the algae filler in the polymeric layer ranges from 0.1 to 20% (w/w), preferably from 0.15 to 15% (w/w), more preferably from 2 to 10 % (w/w), even more preferably is 2% (w/w).

In an embodiment for better results, the algae filler has a particle size ranging from 50 to 500 µm, preferably from 180 to 350 µm, more preferably from 224 to 280 µm. The particle size is measured by sieving, preferably by sieve the particles with more than one sieve, and classify the size by the range between the sieves.

In an embodiment for better results, the polymeric layer is a polyvinyl chloride layer, a polyurethane layer, such as a thermoplastic polyurethane, or a thermoplastic elastomer layer.

In an embodiment, the polymeric compact layer comprises a polymer such as PVC, a plasticizer, and optionally a stabilizer and/or colouring powder. In a further embodiment, the polymeric compact layer comprises 40 to 60% (w/w) of polymer, 30 to 60 % (w/w) of plasticizer, 0 to 20% (w/w) of stabilizer, 0 to 10 % (w/w) parts of colouring powder.

In an embodiment, the polymeric foam layer comprises a polymer such as PVC, a plasticizer, a foaming agent, and optionally a stabilizer and/or colouring powder. In a further embodiment, the polymeric foam layer comprises 0.1to 5% (w/w) of foaming agent.

In an embodiment, the PVC adhesive layer comprises a polymer such as PVC, a plasticizer, a foaming agent, and optionally a stabilizer and/or colouring powder. In a further embodiment, the adhesive layer comprises 35 to 65% (w/w) of polymer, 30 to 60% (w/w) of plasticizer, up to 5% (w/w) of foaming agent, up to 5% (w/w) of stabilizer.

In an embodiment, a conventional foaming agent can be selected by those skilled in the art, in particular a physical foaming agent, such as the microsphere foaming agent, or a chemical foaming agent, such as azodicarbonamide, or a combination of multiple foaming agents already known in the art.

Different polymers are available and are suitable to be used on the disclosed multilayered material. As an example, those skilled in the art can select a conventional polymersaccording to actual needs.

A conventional plasticizer can be selected by those skilled in the art according to actual needs. In an embodiment, the plasticizer is selected from a list comprising adipate-based plasticizers such as bis(2-ethylhexyl)adipate (DEHA, dioctyl adipate plasticizer); Sebacate-based plasticizers - dibutyl sebacate (DBS), di-(2-ethylhexyl)sebacate, and di-octyl Sebacate (or DOS plasticizer); organophosphates such as 20 tricresyl phosphate (TCP), 2-ethylhexyldiphenyl phosphate, and tri-2-ethylhexyl phosphate; nio-based such as glycerol triacetate (Triacetin) acetyltributylcitrate or bioplasticizers derived, or a combination thereof, among others.

A conventional stabilizer can be selected by those skilled in the art according to actual needs. In an embodiment, the stabilizer can be selected from calcium hydroxide -based stabilizer, Ca/Zn stabilizer, K/ZN stabilizer, vegetable oils derivatives, perchlorate-based stabilizers and combinations thereof.

In a further embodiment, a colouring agent, such as a colouring powder, may be added to any of the layers of the disclosed multi-layered material. Those skilled in the art can select a conventional colouring powder according to actual needs, which may be an inorganic pigment or an organic pigment, such as iron oxide, carbon black, and titanium oxide, Sicotan Yellow, Bayferrox Red, PK Green and Heliogen Blue.

In a yet further embodiment, the polymeric layers may further comprise additives selected from: antioxidants, UV absorbers, flame retardants, filler, lubricant, light stabilizer, foaming agent, or mixtures thereof.

Usually, the polymer in the polymeric compact layer, the polymer in the polymeric foam layer, the polymer in the polymeric adhesive layer and the polymer in the polymeric pre-skin layer may be the same or different polymer.

In an embodiment, the algae are a macroalgae preferably selected from a list comprising *Ulva rigida, Chaetomorpha linum,* and *Palmaria palmata.*

In another embodiment, the algae are a microalgae, preferably selected from a list comprising *Chlorella vulgaris,* and *Arthrospira platensis.*

### Example:

Notably, the figures and examples above are not meant to limit the scope of the present disclosure to a single implementation, as other implementations are possible by way of interchange of some or all the described or illustrated elements. Moreover, where certain elements of the present disclosure can be partially or fully implemented using known components, only those portions of such known components that are necessary for an understanding of the present disclosure are described, and detailed descriptions of other portions of such known components are omitted so as not to obscure the disclosure. In the present specification, an implementation showing a singular component should not necessarily be limited to other implementations including a plurality of the same component, and vice-versa, unless explicitly stated otherwise herein. Moreover, applicants do not intend for any term in the specification or claims to be ascribed an uncommon or special meaning unless explicitly set forth as such. Further, the present disclosure encompasses present and future known equivalents to the known components referred to herein by way of illustration.

### Sample 1

This example relates to the preparation of a PVC flexible multi-layered material. The flexible multi-layered material of the present example was obtained by a conventional preparation method, and those skilled in the art will know how to select specific equipment, process steps and conditions. The following example is intended as illustrative only since numerous modifications and variations are possible and will be apparent to those skilled in the art.

### Step 1 - mixing

The components of the pre-skin layer formula given in Table 1 are stirred mechanically under vacuum in a mixing tank until uniform mixing is achieved. A pre-skin layer PVC paste is thus obtained.

The components of the compact layer formula given in Table 1 are stirred mechanically under vacuum in a mixing tank until uniform mixing is achieved. A compact layer PVC paste is thus obtained.

The components of the foam layer formula given in Table 1 are stirred mechanically under vacuum in a mixing tank until uniform mixing is achieved. A foam layer PVC paste is thus obtained.

The components of the adhesive layer formula given in Table 1 are stirred mechanically under vacuum in a mixing tank until uniform mixing is achieved. An adhesive layer PVC paste is thus obtained.

### Step 2 - coating and base fabric attachment

Using an indirect coating method, the paste of the first PVC layer, is applied to a release paper, and then fed into a first-stage oven for gelation.

Next, the second PVC layer paste, which can be a compact or a foam layer, is applied on the first layer that has gelled and set, and then fed into a second-stage oven for gelation and setting.

Next, the third PVC layer paste, which can be a adhesive foam or adhesive compact layer, paste is applied to the second layer that has gelled and set, then a fabric is applied, and fed into a third-stage oven for final setting, to obtain a PVC artificial leather coated material.

After leaving the oven, the PVC artificial leather coated material and release paper are separated, and each rolled up separately.

### Step 3 - lacquer coating

The lacquering line comprises three or four heads, which are followed by a drying chamber. The lacquer is transferred to the material via a cylinder, which then passes through a drying chamber. This procedure is repeated over the three or four heads of the production line.

### Step 4-embossing

The embossing process involves heating the material surface and the mechanical compression of the product by two cylinders, one of which is made from metal and the other of which is made from rubber. The rubber cylinder is flat and in contact with the back side of the material, while the metal cylinder has a grain pattern and is in contact with the surface of the material. This results in the formation of a texture on the material.

### Sample 2-4

Samples 2 - 4 also relate to the preparation of PVC artificial leathers. The preparation process for the PVC artificial leathers, and the choice of base fabric layer are all exactly the same as in Example 1; see Table 1, for the differences.

### Comparative examples - Reference

Reference sample relates to a multi-layered material comprising a PVC compact layer, two PVC foam layers and one textile layer..

**Table 1- Composition of different samples**

| | **Component** | **Sample 1** | **Sample 2** | **Sample 3** | **Sample 4** | **Comparative Reference** |
|---|---|---|---|---|---|---|
| Pre-skin layer | PVC emulsion resin | - | 55.7% | - | 55.7% | - |
| | Plasticizer | - | 40% | - | 40% | - |
| | Pigment | - | - | - | - | - |
| | Algae (224-280 µm) | - | - | - | - | - |
| Compact layer | PVC emulsion resin | 52% | 52% | 52% | 52% | 54.5% |
| | Plasticizer | 41.8% | 41.8% | 41.8% | 41.8% | 39.2% |
| | Pigment | 0.3% | 0.3% | 1.1% | 1.1% | 2.3% |
| | Algae (224-280 µm) | 2% (w/w) | 2% (w/w) | 0.5% (w/w) | 0.5% (w/w) | - |
| Foam layer | PVC emulsion resin | 51.9% | - | 51.9% | - | 47% |
| | Plasticizer | 43.2% | - | 43.2% | - | 41.2% |
| | Pigment | 0.3% | - | 1.1% | - | 1% |
| | Algae (224-280 µm) | - | - | - | - | - |
| Adhesive layer | PVC emulsion resin | 53.6% | 53.6% | 53.6% | 53.6% | 53.3% |
| | Plasticizer | 41.1% | 41.1% | 41.1% | 41.1% | 41.3% |
| | Pigment | - | 0.3% | - | 1.1% | - |
| | Algae (224-280 µm) | - | - | - | - | - |

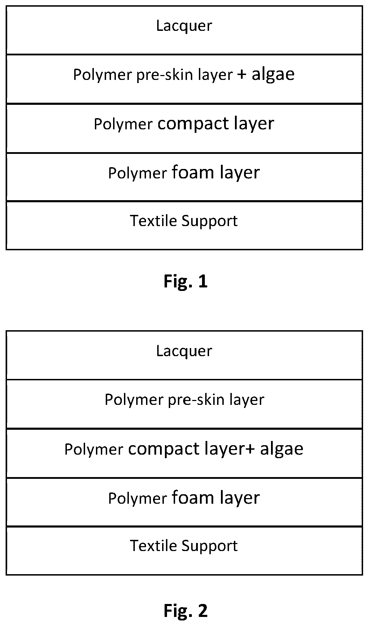

In an embodiment, the flexible multi-layered material comprising compact, foam and adhesive layers (Figure 2), was used to access the performance of the flexible multi-layered material comprising algae as filler.

In an embodiment, the different samples were tested regarding their mechanical properties and resistance:
- Sample 1 - Multi-layered material comprising a compact layer of black PVC with 2% (w/w) of algae (particle size of the algae particles between 224-280 µm), a PVC foam layer, and a adhesive layer with textile backing;
- Sample 2 - Multi-layered material comprising a pre-skin of PVC, a compact layer of black PVC with 2% (w/w) of algae (particle size of the algae particles between 224-280 µm), a PVC foam layer, with textile backing;
- Sample 3 - Multi-layered material comprising a compact layer of beige PVC with 0.5% (w/w) of algae (particle size of the algae particles between 224-280 µm), a PVC foam layer, and adhesive layer with a textile layer;
- Sample 4 - Multi-layered material comprising a pre-skin of PVC, compact layer of beige PVC with 0.5% (w/w) of algae (particle size of the algae particles between 224-280 µm), a PVC foam layer, with a textile backing ;
- Comparative Reference - Multi-layered material comprising a PVC compact layer, a PVC foam layer and a adhesive layer with textile backing .

Table 2 lists the results obtained with the different tested samples comprising algae. Samples without algae were used as control. The column listed on Table 1 as "PVC with Algae" is the reference to average of all samples submitted for testing. The column listed in Table 1 as "Reference" relates to the results obtained with the comparative reference sample.

**Table 2 -Results obtained with a flexible multi-layered material of sample 1-4**

| **Measured parameter** | **Test** | **Target value (grade)** | **Reference (PVC construct without algae)** | **Sample 1** | **Sample 2** | **Sample 3** | **Sample 4** |
|---|---|---|---|---|---|---|---|
| **Alongation 100N T** | ISO 1421, Method 1:2016 | 9%-19% | 27.3% | 14.5% | 14.8% | 21.4% | 20.4% |
| **Alongation 100N TR** | ISO 1421, Method 1:2016 | 30%-48% | 15.1% | 46.8% | 55.1% | 40.3% | 43.8% |
| **Alongation 50N T** | ISO 1421, Method 1:2016 | 3%-9% | 7.2% | 7.0% | 6.8% | 9.8% | 8.7% |
| **Alongation 50N TR** | ISO 1421, Method 1:2016 | 9%-21% | 12.6% | 18.0% | 20.1% | 17.3% | 17.8% |
| **Abrasion** | PSA D44 1073:200 7 | OK | OK | OK | OK | OK | OK |
| **Aging 168H 90°C** | DBL 5348, 7.18.3:20 15-09 | 4 | 5 | 4.5 | 4.5 | - | - |
| **Flexing 200 000 D** | DIN 53359:20 06 | OK | OK | OK | OK | OK | OK |
| **Flexing 200 000 L** | DIN 53359:20 06 | OK | OK | OK | OK | OK | OK |
| **Flexing 200 000 TR** | DIN 53359:20 06 | OK | OK | OK | OK | OK | OK |
| **Flammabil ity** | GS 97038:20 20 | <100mm/ min | 27.7 | 7.8 | 52 | 4.5 | 32.0 |
| **Light Fastness 1 Cycle** | ISO 105-B06, Cond. 3. 2020 | ≥7 | 7 | 7 | 7 | 6.7 | 7 |
| **Light Fastness 3 Cycle** | | ≥3 | 4 | 4 | 4 | 4 | 4.5 |

| | | | | | | | |
|---|---|---|---|---|---|---|---|
| T and TR are related with the direction of coating. T - measurement in the direction that the material has been coated, i.e., in the longitudinal direction of the sample; TR - measurement in a sample cut transversally to the direction that the material is coated, i.e., transversal direction of the sample. | | | | | | | |

The results presented in Table 1 show that the incorporation of algae into the PVC layers does not compromise the evaluated mechanical properties. All the tested parameters are within the target value range, confirming the suitability of the developed materials to be used in the automotive industry, namely car interior trims and upholstery. Surprisingly, the decrease in the sample weight caused by the substitution of the polymeric matrix by algae did not affect the final properties of the material. The presence of algae within the matrix, which affects the polymeric network, also does not influence the evaluated properties.

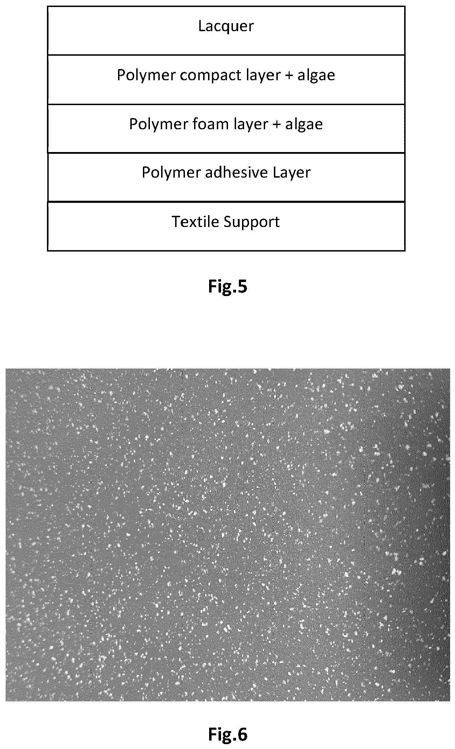

As shown in Figure 6, the presence of algae within the construct does not affect the physical integrity of the material, and allows carbon capture by the algae particles, which are visible and connected to the exterior environment in the finished piece.

As used in the specification and claims, the singular forms "a", "an" and "the" include plural references unless the context clearly dictates otherwise. For example, the term "a sample" includes a plurality of samples, including mixtures thereof.

Where ranges are given, endpoints are included. Furthermore, it is to be understood that unless otherwise indicated or otherwise evident from the context and/or the understanding of one of ordinary skill in the art, values that are expressed as ranges can assume any specific value within the stated ranges in different embodiments of the invention, to the tenth of the unit of the lower limit of the range, unless the context clearly dictates otherwise. It is also to be understood that unless otherwise indicated or otherwise evident from the context and/or the understanding of one of ordinary skill in the art, values expressed as ranges can assume any subrange within the given range, wherein the endpoints of the subrange are expressed to the same degree of accuracy as the tenth of the unit of the lower limit of the range.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable.

The following claims further set out particular embodiments of the disclosure.

## Claims

1. A flexible multi-layered material comprising:
a plurality of polymeric layers, wherein at least one of the plurality of polymeric layers comprises algae particles as a filler, and wherein the concentration of algae particles in the at least one of the plurality of polymeric layer ranges from 0.1% to 20% (w/w).

2. The flexible multi-layered according to the previous claim wherein the concentration of algae particles in the at least one of the plurality of polymeric layers ranges from 0.15% - 10% (w/w).

3. The flexible multi-layered material according to any of the previous claim wherein the particle size of the algae particles ranges from 50 to 500 µm, measured by sieving; preferably 100 to 400 µm; more preferably 200 to 300 µm.

4. The flexible multi-layered material according to any of the previous claims wherein the algae is a macroalgae, a microalgae, or mixtures thereof.

5. The flexible multi-layered material according to the previous claim wherein the macroalgae are selected from a list comprising *Ulva rigida, Chaetomorpha linum,* and *Palmaria palmata.*

6. The flexible multi-layered material according to the previous claim 4 wherein the microalgae are selected from a list comprising *Chlorella vulgaris,* and *Arthrospira platensis.*

7. The flexible multi-layered material according to any of the previous claims wherein the plurality of polymeric layers comprises polyvinyl chloride, a polyurethane, a thermoplastic elastomer, or combinations thereof.

8. The flexible multi-layered material according to any of the previous claims wherein at least one of the plurality of polymeric layers is a polymeric compact layer or a foam polymeric layer.

9. The flexible multi-layered material according to the previous claim wherein the grammage of the polymeric compact layer ranges from 200 to 400 g/m², preferably 250 to 350 g/m² and/or the density of the polymeric compact layer ranges from 1100 to 1300 kg/m³; and/or wherein the grammage of the polymeric foam layer ranges from 120 to 350 g/m², preferably 140 to 185 g/m² and/or the the density of the polymeric foam layer ranges from 500 to 1050 kg/m³, preferably from 600 to 1000 kg/m³.

10. The flexible multi-layered material according to any of the previous claims wherein the flexible multi-layered material further comprises an adhesive layer, a support layer, a lacquer layer, a pre-skin layer or combinations thereof.

11. The flexible multi-layered material according to any of the previous claims wherein the lacquer layer is an external layer over the plurality of polymeric layers.

12. The flexible multi-layered material according to any of the previous claims wherein the support layer comprises textile, knitted fabric, spacer fabric, woven, natural fibers, or a combination of thereof.

13. The flexible multi-layered material according to any of the previous claims wherein the adhesive layer is a polymeric adhesive foam layer.

14. An article comprising a flexible multi-layered material as described in any one of the previous claims.

15. The article according to the previous claim wherein said article is an upholstery article, or a seat, or door panel, or automotive interior trim.
